# EUROPÄISCHE PATENTSCHRIFT

(11) **EP 4 178 731 B1**
(45) Veröffentlichungstag und Bekanntmachung des Hinweises auf die Patenterteilung: **15.05.2024**
(21) Anmeldenummer: 21737593.0
(22) Anmeldetag: 25.06.2021
(51) Int. Cl.: B06B 1/06, G01S 7/521, G10K 11/32, A61B 8/00

(54) **WASSERSCHALLWANDLER MIT EINER GERICHTETEN STRAHLUNGSCHARAKTERISTIK**
WATERBORNE SOUND TRANSDUCER HAVING A DIRECTED RADIATION CHARACTERISTIC
TRANSDUCTEUR SONORE EN MILIEU AQUEUX PRÉSENTANT UNE CARACTÉRISTIQUE DE RAYONNEMENT DIRIGÉ

(30) Priorität: 08.07.2020 DE 102020208570
(43) Veröffentlichungstag der Anmeldung: 17.05.2023
(73) Patentinhaber: ATLAS ELEKTRONIK GmbH, 28309 Bremen (DE); thyssenkrupp AG, 45143 Essen (DE)
(72) Erfinder: THEUERKAUF, Nils, 28865 Lilienthal (DE); STEGEN, Ole, 22547 Hamburg (DE)
(74) Vertreter: thyssenkrupp Intellectual Property GmbH
(86) Internationale Anmeldenummer: PCT/EP2021/067535
(87) Internationale Veröffentlichungsnummer: WO 2022/008264

(56) Entgegenhaltungen:
- EP-A1- 0 072 498
- DE-T2- 69 422 867
- DE-U1-202007 017 913
- FR-A1- 2 517 162

## Beschreibung

Die Erfindung bezieht sich auf die Optimierung einer gerichteten Strahlungscharakteristik (auch als Richtcharakteristik bezeichnet) von Wasserschallwandlern. Unter dem Begriff der Strahlungscharakteristik wird sowohl die Sendecharakteristik als auch die Empfangscharakteristik von Wasserschallwandlern subsumiert.

Wasserschallwandler weisen, insbesondere für den Empfang von höheren Frequenzen beispielsweise ab 10 kHz, häufig eine Vielzahl von Wandlerelementen (auch als Stäbchen bezeichnet) auf. Die Wandlerelemente sind gleichmäßig linear in einer Ebene angeordnet. Um die Strahlungscharakteristik in eine Richtung zu optimieren, also die gewünschte Richtcharakteristik einzustellen, werden die Wandlerelemente häufig auf einer gekrümmten Bahn oder gekrümmten Fläche angeordnet. Die resultierende Strahlungscharakteristik weist dann jedoch einen wellenförmigen Verlauf auf. Dies hat beispielsweise beim Empfang von Schallwellen den Nachteil, dass die gleichen Geräusche von (benachbarten) Objekten, die sich in der gleichen Entfernung aber um wenige Grad unterschiedlichen Winkel ausgehend von dem Wasserschallwandler befinden, mit einer unterschiedlichen Intensität von dem Wasserschallwandler detektiert werden. Dies hat zur Folge, dass den Objekten unterschiedliche Entfernungen zugewiesen werden können, obwohl sie tatsächlich aber die gleiche Entfernung zu dem Wasserschallwandler aufweisen. Allgemein ausgedrückt erschwert der wellenförmige Verlauf der Strahlungscharakteristik die Signalverarbeitung der empfangenen Schallwellen.

EP 0 072 498 A1 offenbart ein Ultraschall Diagnose Gerät, das eine Breite des Wandlerarrays ändern kann.

DE 694 22 867 T2 offenbart einen Messwandler und im Besonderen einen phasengesteuerten Breitband-Gruppenmesswandler zur Verwendung im Bereich der medizinischen Diagnose.

DE 20 2007 017913 U1 offenbart eine Ultraschall Sende- und Empfangseinheit mit mindestens einem Wandler zur Erzeugung von Mehrfrequenz-Ultraschallsignalen und zum Empfang von durch ein Untersuchungsmedium beeinflussten, insbesondere reflektierten, gedämpften oder abgelenkten Ultraschallsignalen. Die Wandler weisen unterschiedliche Dicken auf.

FR 2 517 162 A1 offenbart akustische Systeme und bezieht sich insbesondere auf Elektretwandler, die eine gerichtete Antwort geben sollen.

Die Aufgabe der vorliegenden Erfindung besteht deshalb darin, ein verbessertes Konzept für Wasserschallwandler zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen einen Wasserschallwandler mit einer gerichteten Strahlungscharakteristik. Der Wasserschallwandler weist eine Vielzahl von Wandlerelementen auf. Die Wandlerelemente sind ausgebildet, Wasserschall in ein dem Schalldruck entsprechenden elektrisches Signal umzuwandeln und/oder eine anliegende elektrische Spannung in Wasserschall umzuwandeln. Die Wandlerelemente sind derart angeordnet, dass die Wandlerelemente zumindest teilweise zueinander, d.h. zu benachbarten Wandlerelementen, unterschiedliche Abstände aufweisen und/oder die Wandlerelemente unterschiedliche Dicken aufweisen, um die Strahlungscharakteristik des Wasserschallwandlers zu glätten. Insbesondere werden die Dicken der Wandlerelemente zum Rand des Wandlerelements reduziert und/oder die Abstände zwischen den Wandlerelementen vergrößert. In anderen Worten weisen die Wandlerelemente in Richtung des Rands des Wasserschallwandlers einen größeren Abstand zueinander auf, als in der Mitte des Wasserschallwandlers und/oder die Wandlerelemente weisen in Richtung des Rands des Wasserschallwandlers eine geringere Dicke auf, als in der Mitte des Wasserschallwandlers. Als Dicke eines Wandlerelements wird die (z.B. mittlere) laterale Ausdehnung des Wandlerelements angesehen. Als Abstand wird beispielsweise der Mittenabstand, auch als Pitch bezeichnet, oder die Fugenbreite, auch als Kerf bezeichnet, angesehen.

Der Bereich zwischen zwei Wandlerelementen wird als Fuge bezeichnet. Die Fuge kann in einen Block einer (Piezo-) Keramik hineingeschnitten sein, um die Wandlerelemente zu bilden. Die Wandlerelemente können aber auch mittels eines additiven Fertigungsverfahrens hergestellt werden. Die Fugen können mit einem Füllmaterial, z.B. einem Kunststoff, beispielsweise einem Epoxid oder einem Polyurethan, verfüllt sein. Dies wird auch als Piezokompositkeramik bezeichnet, d.h. der Wasserschallwandler weist dann eine Piezokompositkeramik auf.

Idee ist, die gerichtete Strahlungscharakteristik des Wasserschallwandlers durch den veränderten Abstand bzw. die veränderte Dicke der Wandlerelemente zu optimieren. Die Optimierung zielt darauf ab, die Welligkeit der Strahlungscharakteristik über dem Empfangswinkel zu reduzieren. In anderen Worten wird die winkelabhängige Sende- bzw. Empfangsintensität geglättet.

In Ausführungsbeispielen sind die Wandlerelemente auf einer gekrümmten Bahn angeordnet. Die Bahn ist vorteilhafterweise konvex gekrümmt. Beispielsweise beschreibt die Bahn einen Teilkreis. In anderen Worten ist die Bahn derart gekrümmt, dass die Wandlerelemente zum Rand des Wasserschallwandlers von der Richtung, in der die Strahlungscharakteristik optimiert ist, weg zeigen. Mittels der Krümmung der Bahn kann die reale Strahlungscharakteristik an die gewünschte Strahlungscharakteristik des Wasserschallwandlers angenähert werden.

In weiteren Ausführungsbeispielen weist eine Auswahl der Wandlerelemente, die zumindest die Hälfte, insbesondere zwei Drittel oder drei Viertel, der Wandlerelemente der Vielzahl von Wandlerelementen umfasst, zueinander den (im Rahmen der Fertigungstoleranzen) gleichen Abstand auf. Die Auswahl der Wandlerelemente ist eine echte Teilmenge der Vielzahl von Wandlerelementen. Vorteilhafterweise ist die Auswahl der Wandlerelemente in der Mitte des Wasserschallwandlers angeordnet. D.h., der Abstand bzw. die Dicke der Wandlerelemente verändert sich nicht sukzessive mit größerem Abstand zur Mitte des Wasserschallwandlers, sondern der Abstand und/oder die Dicke der Wandlerelemente bleiben zunächst konstant. Erst in einem äußeren Bereich des Wasserschallwandlers ändert sich die Dicke bzw. der Abstand der Wandlerelemente.

In anderen Worten ist eine erste Teilmenge der Wandlerelemente ausgehend von der Mitte des Wasserschallwandlers äquidistant angeordnet, wobei eine zweite Teilmenge der Wandlerelemente mit zunehmendem Abstand von der Mitte des Wasserschallwandlers einen größeren Abstand zueinander aufweist. Ergänzend oder alternativ weist die erste Teilmenge der Wandlerelemente ausgehend von der Mitte des Wasserschallwandlers die gleiche Dicke auf, wobei eine zweite Teilmenge der Wandlerelemente mit zunehmendem Abstand von der Mitte des Wasserschallwandlers eine abnehmende Dicke aufweist. Beispielsweise umfasst die erste Teilmenge der Wandlerelemente zumindest die Hälfte der Wandlerelemente der Vielzahl von Wandlerelementen. Eine Dicke des äußersten Wandlerelements kann derart gewählt sein, dass ein erstes (mittiges) Wandlerelement mindestens doppelt so breit ist wie ein äußerstes Wandlerelement.

Analog ist ein Verfahren zur Herstellung eines Wasserschallwandlers mit einer gerichteten Strahlungscharakteristik mit folgenden Schritten offenbart: Anordnen einer Vielzahl von Wandlerelementen derart, dass die Wandlerelemente zueinander unterschiedliche Abstände aufweisen und/oder die Wandlerelemente unterschiedliche Dicken aufweisen, um die Strahlungscharakteristik des Wasserschallwandlers zu glätten, wobei die Wandlerelemente ausgebildet sind, Schallwellen zu empfangen und in ein gemeinsames, den Schallwellen entsprechendes, elektrisches Signal umzuwandeln.

Bevorzugte Ausführungsbeispiele der vorliegenden Erfindung werden nachfolgend Bezug nehmend auf die beiliegenden Zeichnungen erläutert. Es zeigen:
Fig. 1: eine schematische Schnittdarstellung eines Wasserschallwandlers, wobei
Fig. 1a und Fig. 1b zwei unterschiedliche mögliche Anordnungen von Wandlerelementen des Wasserschallwandlers zeigen;
Fig. 2: beispielhafte Strahlungscharakteristiken von Wasserschallwandlern mit einer Richtcharakteristik, wobei Fig. 2a eine exemplarische Gegenüberstellung von einer schematischen Strahlungscharakteristik bekannter Wasserschallwandler (linke Hälfte) mit einer idealen Strahlungscharakteristik (rechte Hälfte) zeigt und wobei
Fig. 2b eine simulierte Strahlungscharakteristik eines bekannten Wasserschallwandlers und Fig. 2c eine simulierte Strahlungscharakteristik des Wasserschallwandlers aus Fig. 1b zeigt.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

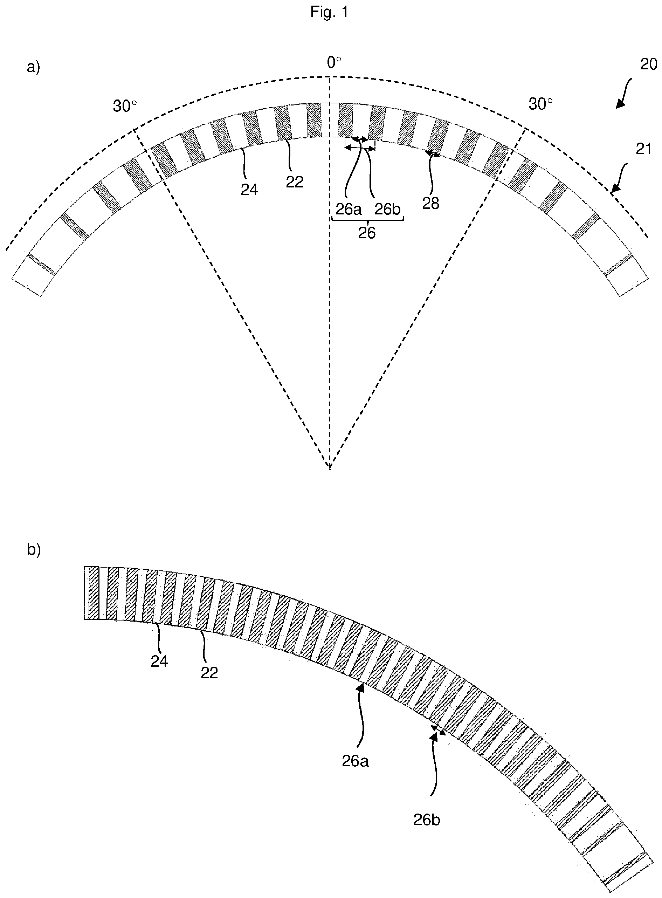

Fig. 1a und Fig. 1b zeigen jeweils eine schematische Schnittdarstellung eines Wasserschallwandlers 20 mit einer gerichteten Strahlungscharakteristik, wobei in Fig. 1b zur Wahrung der Übersichtlichkeit nur eine Hälfte des Wasserschallwandlers 20 dargestellt ist. Dem Wasserschallwandler 20 aus Fig. 1a überlagert ist ein Ausschnitt eines Polargitters 21. Der Wasserschallwandler ist für den Empfang und die Abstrahlung in 0°-Richtung optimiert. Der Wasserschallwandler 20 weist eine Vielzahl von Wandlerelementen 22 auf. Die Wandlerelemente 22 sind durch Fugen 24 voneinander getrennt. Die Wandlerelemente 22 können Wasserschall in eine dem Schalldruck entsprechenden elektrischen Signal umwandeln und/oder eine anliegende elektrische Spannung in Wasserschall umwandeln.

Ferner sind die Wandlerelemente 22 derart angeordnet, dass die Wandlerelemente 22 zueinander unterschiedliche Abstände 26 aufweisen und/oder die Wandlerelemente 22 unterschiedliche Dicken 28 aufweisen um die Strahlungscharakteristik des Wasserschallwandlers 20 zu glätten. Der Abstand 26 wird beispielsweise als Fugenbreite 26a oder als Mittenabstand 26b bestimmt. Weist der Schallwandler 20 wie dargestellt eine Krümmung auf, d.h. sind die Wandlerelemente 22 auf einer gekrümmten Bahn angeordnet, kann der Abstand als Länge des inneren (Kreis-) Bogens bestimmt werden, auf dem die benachbarten Wandlerelemente angeordnet sind.

In den Ausführungsbeispielen aus Fig. 1a und Fig. 1b weisen die Wandlerelemente in Richtung des Rands des Wasserschallwandlers einen größeren Abstand zueinander auf, als in der Mitte des Wasserschallwandlers. Dies betrifft vornehmlich die Fugenbreite 26a, aber auch der Mittenabstand 26b ist zumindest zwischen den äußeren beiden Wandlerelementen größere als zwischen den vorangegangenen Wandlerelementen.

Weiterhin weisen die Wandlerelemente 22 in Richtung des Rands des Wasserschallwandlers 20 eine geringere Dicke auf, als in der Mitte des Wasserschallwandlers.

In dem Ausführungsbeispiel aus Fig. 1b sind die Wandlerelemente 22 wie folgt angeordnet. Die ersten 27 Wandlerelemente der Hälfte des Wasserschallwandlers 20 weisen eine Dicke von jeweils 800 µm (Mikrometer) auf. Die daran angrenzenden fünf Wandlerelemente sind jeweils 100 µm dünner als das vorangegangene Wandlerelement. D.h., das Wandlerelement 28 ist 700 µm, das Wandlerelement 29 ist 600 µm, das Wandlerelement 30 ist 500 µm, das Wandlerelement 31 ist 400 µm und das Wandlerelement 32 ist 300 µm dick.

Der Mittenabstand 26b zwischen den Wandlerelementen 1 bis 32 bleibt konstant (ist also zu dem jeweils vorherigen Wandlerelement jeweils gleich groß). Der Mittenabstand beträgt hier 1400 µm. Daraus resultiert jedoch, dass die Fugenbreite zwischen den Wandlerelementen 28 bis 32 entsprechend größer wird. Zwischen den Wandlerelementen 1 bis 28 beträgt die Fugenbreite entsprechend jeweils 600 µm (Mittenabstand = 1400 µm abzüglich jeweils der Hälfte der Breite der angrenzenden Wandlerelemente =2×400 µm). Das letzte (33.) Wandlerelement kann die gleiche Breite wie das vorangegangene Wandlerelement aufweisen, also in diesem Ausführungsbeispiel 300 µm. Die Fugenbreite beträgt hier jedoch 2500 µm (der Mittenabstand dementsprechend 2800 µm). Eine Dicke des äußersten Wandlerelements kann demnach derart gewählt sein, dass ein erstes Wandlerelement mindestens doppelt so breit ist die das äußerste Wandlerelement. Die Wandlerelemente werden ausgehend von der Mitte (0°) des Wasserschallwandlers jeweils getrennt pro Seite mit zunehmenden Winkeln bis zum Rand des Wasserschallwandlers durchnummeriert.

Je nachdem welches Abstandsmaß zugrunde gelegt wird, können die ersten 27 bzw. die ersten 32 Wandlerelemente als Auswahl der Wandlerelemente bezeichnet werden, die zueinander den gleichen Abstand aufweisen. Alternativ können die ersten 27 bzw. die ersten 32 Wandlerelemente als erste Teilmenge der Wandlerelemente bezeichnet werden, die ausgehend von der Mitte des Wasserschallwandlers äquidistant angeordnet sind, wobei eine zweite Teilmenge der Wandlerelemente (entsprechend die Wandlerelemente 28 bis 33 bzw. das Wandlerelement 33) mit zunehmendem Abstand von der Mitte des Wasserschallwandlers einen größeren Abstand zueinander aufweisen.

Ebenfalls kann die erste Teilmenge (hier die Wandlerelemente 1 bis 27) der Wandlerelemente ausgehend von der Mitte des Wasserschallwandlers die gleiche Dicke aufweisen. Die erste Teilmenge deckt sich also mit der vorangegangenen ersten Teilmenge, wenn als Abstandsmaß die Fugenbreite verwendet wird. Eine zweite Teilmenge der Wandlerelemente weist mit zunehmendem Abstand von der Mitte des Wasserschallwandlers eine abnehmende Dicke auf. Die zweite Teilmenge deckt sich jedoch nicht mit der vorbeschriebenen zweiten Teilmenge, da das letzte Wandlerelement die gleiche Dicke aufweist wie das vorangegangene Wandlerelement. Die zweite Teilmenge umfasst hier demnach die Wandlerelemente 28 bis 32.

Unabhängig von der Wahl des Abstandsmaßes umfasst die erste Teilmenge der Wandlerelemente zumindest die Hälfte der Wandlerelemente der Vielzahl von Wandlerelemente.

Der Wasserschallwandler 20 ist symmetrisch aufgebaut, d.h. die nicht gezeigte Hälfte kann durch entsprechende Spiegelung der dargestellten Hälfte gewonnen werden.

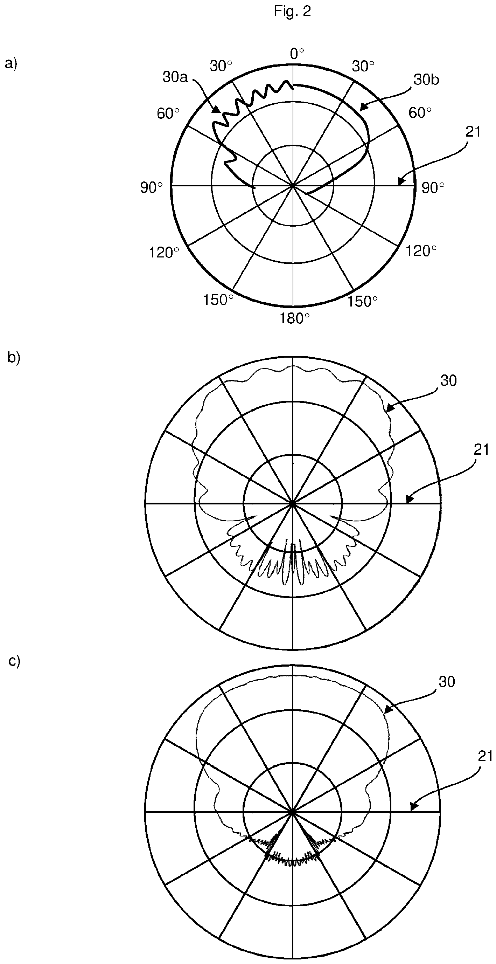

Fig. 2a zeigt in dem Polargitter 21 zwei verschiedene Strahlungscharakteristiken 30a, 30b. Kreise stellen gleiche Intensitäten dar, je größer der Kreis desto größer die Intensität. Die Winkelangaben stellen den Strahlungswinkel (also Sende- bzw. Empfangswinkel) dar. Linksseitig ist die beispielhafte schematische Strahlungscharakteristik 30a eines bekannten Wasserschallwandlers dargestellt während rechtsseitig eine beispielhafte, gewünschte, optimale Strahlungscharakteristik 30b dargestellt ist. Die Strahlungscharakteristik 30a weist über dem Strahlungswinkel eine deutliche Welligkeit in der Intensität auf, die unerwünscht ist (s. Strahlungscharakteristik 30b).

Fig. 2b zeigt eine simulierte Strahlungscharakteristik 30 eines bekannten Wasserschallwandlers. Das Polargitter 21 entspricht dem Polargitter der Fig. 2a, insbesondere auch hinsichtlich der Winkelangaben. Wenn in dieser Offenbarung auf einen bekannten Wasserschallwandler bezuggenommen wird, bezeichnet dies einen Wasserschallwandler mit ausschließlich äquidistant angeordneten Wandlerelementen gleicher Dicke. Auch hier ist die Welligkeit der Strahlungscharakteristik über dem Strahlungswinkel deutlich erkennbar.

Fig. 2c zeigt eine simulierte Strahlungscharakteristik 30 des Wasserschalwandlers aus Fig. 1b. Das Polargitter 21 entspricht dem Polargitter der Fig. 2a, insbesondere auch hinsichtlich der Winkelangaben. Es wird deutlich, dass die Strahlungscharakteristik 30 eine deutlich geringere Welligkeit im Vergleich zu der Strahlungscharakteristik aus Fig. 2b aufweist. Ferner ist die Unterdrückung von unerwünschten Nebengeräuschen aus deutlich anderen Richtungen als der Hauptempfangsrichtung deutlich verbessert. Die Hauptempfangsrichtung liegt bei 0°. Die verbesserte Unterdrückung der Nebengeräusche wird bei Winkeln größer als 60° in beiden Richtungen deutlich.

Die offenbarten (Wasser-) Schallwandler sind für den Einsatz unter Wasser, insbesondere im Meer, ausgelegt. Die Schallwandler sind ausgebildet, Wasserschall in eine dem Schalldruck entsprechenden elektrischen Signal (z.B. Spannung oder Strom), das Wasserschallsignal, umzuwandeln. Überdies sind die Schallwandler ausgebildet, eine anliegende elektrische Spannung in Wasserschall umzuwandeln. Die Schallwandler können demnach als Wasserschallempfänger und/oder als Wasserschallsender verwendet werden. Als sensorisches Material weisen die Schallwandler ein piezoelektrisches Material, beispielsweise eine Piezokeramik, auf.

Die Schallwandler werden für (Aktiv- und/oder Passiv-) Sonar (sound navigation and ranging, dt.: Schall-Navigation und -Entfernungsbestimmung) eingesetzt. Die Schallwandler sind nicht für medizinische Anwendungen geeignet.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: Wasserschallwandler
- 21: Polargitter
- 22: Wandlerelemente
- 24: Fugen
- 26: Abstand zwischen den Wandlerelementen
- 28: Dicke der Wandlerelemente
- 30: Strahlungscharakteristik

## Patentansprüche

1. Wasserschallwandler (20) mit einer gerichteten Strahlungscharakteristik für ein Sonar mit folgenden Merkmalen:
einer Vielzahl von Wandlerelementen (22), die ausgebildet sind, Wasserschall in ein dem Schalldruck entsprechendes elektrisches Signal umzuwandeln und/oder eine anliegende elektrische Spannung in Wasserschall umzuwandeln;
wobei die Wandlerelemente (22) unterschiedliche Dicken (28) aufweisen und/oder die Wandlerelemente (22) derart angeordnet sind, dass die Wandlerelemente (22) zumindest teilweise unterschiedliche Abstände (26) zu benachbarten Wandlerelementen aufweisen, um die Strahlungscharakteristik (30) des Wasserschallwandlers (20) zu glätten;
wobei die Dicke eines Wandlerelements der Vielzahl von Wandlerelementen die, insbesondere mittlere, laterale Ausdehnung des Wandlerelements ist.

2. Wasserschallwandler (20) gemäß Anspruch 1,
wobei die Wandlerelemente (22) auf einer gekrümmten Bahn angeordnet sind.

3. Wasserschallwandler (20) gemäß einem der vorherigen Ansprüche,
wobei die Wandlerelemente (22) in Richtung des Rands des Wasserschallwandlers (20) einen größeren Abstand (26) zueinander aufweisen, als in der Mitte des Wasserschallwandlers.

4. Wasserschallwandler (20) gemäß einem der vorherigen Ansprüche,
wobei die Wandlerelemente (26) in Richtung des Rands des Wasserschallwandlers eine geringere Dicke (28) aufweisen, als in der Mitte des Wasserschallwandlers.

5. Wasserschallwandler (20) gemäß einem der vorherigen Ansprüche,
wobei der Wasserschallwandler eine Piezokompositkeramik aufweist.

6. Wasserschallwandler (20) gemäß einem der vorherigen Ansprüche,
wobei eine Auswahl der Wandlerelemente (22) zueinander den gleichen Abstand aufweist, wobei die Auswahl zumindest die Hälfte, insbesondere zwei Drittel oder drei Viertel, der Wandlerelemente (22) der Vielzahl von Wandlerelementen (22) umfasst.

7. Wasserschallwandler (20) gemäß Anspruch 6,
wobei die Auswahl der Wandlerelemente (22) in der Mitte des Wasserschallwandlers angeordnet ist.

8. Wasserschallwandler (20) gemäß einem der vorherigen Ansprüche,
wobei eine erste Teilmenge der Wandlerelemente (22) ausgehend von der Mitte des Wasserschallwandlers äquidistant angeordnet sind, wobei eine zweite Teilmenge der Wandlerelemente (22) mit zunehmendem Abstand von der Mitte des Wasserschallwandlers einen größeren Abstand zueinander aufweisen.

9. Wasserschallwandler (20) gemäß einem der vorherigen Ansprüche,
wobei eine erste Teilmenge der Wandlerelemente (22) ausgehend von der Mitte des Wasserschallwandlers die gleiche Dicke aufweist, wobei eine zweite Teilmenge der Wandlerelemente mit zunehmendem Abstand von der Mitte des Wasserschallwandlers eine abnehmende Dicke (28) aufweist.

10. Wasserschallwandler (20) gemäß einem der Ansprüche 8 oder 9,
wobei die erste Teilmenge der Wandlerelemente (22) zumindest die Hälfte der Wandlerelemente der Vielzahl von Wandlerelemente umfasst.

11. Wasserschallwandler (20) gemäß einem der vorherigen Ansprüche,
wobei die Dicke des äußersten Wandlerelements derart gewählt ist, dass ein erstes Wandlerelement mindestens doppelt so breit ist wie ein äußerstes Wandlerelement.

12. Verfahren zur Herstellung eines Wasserschallwandlers mit einer gerichteten Strahlungscharakteristik für ein Sonar mit folgenden Schritten:
- Anordnen einer Vielzahl von Wandlerelementen derart, dass die Wandlerelemente zueinander unterschiedliche Abstände aufweisen und/oder die Wandlerelemente unterschiedliche Dicken aufweisen um die Strahlungscharakteristik des Wasserschallwandlers zu glätten, wobei die Wandlerelemente, ausgebildet sind, Wasserschall in ein dem Schalldruck entsprechendes elektrisches Signal umzuwandeln und/oder eine anliegende elektrische Spannung in Wasserschall umzuwandeln, wobei die Dicke eines Wandlerelements der Vielzahl von Wandlerelementen die, insbesondere mittlere, laterale Ausdehnung des Wandlerelements ist.

## Claims

1. A waterborne sound transducer (20) having a direction characteristic for a sonar with the following features:
a multiplicity of transducer elements (22) which are designed to convert waterborne sound into an electrical signal corresponding to the sound pressure and/or to convert an applied electrical voltage into waterborne sound;
wherein the transducer elements (22) have different thicknesses (28) and/or the transducer elements (22) are arranged such that at least some of the transducer elements (22) have different spacings (26) from adjacent transducer elements in order to smooth the radiation characteristic (30) of the waterborne sound transducer (20);
wherein the thickness of a transducer element of the multiplicity of transducer elements is the, in particular mean, lateral extension of the transducer element.

2. The waterborne sound transducer (20) as claimed in claim 1,
wherein the transducer elements (22) are arranged on a curved path.

3. The waterborne sound transducer (20) as claimed in one of the preceding claims,
wherein the transducer elements (22) have a greater spacing (26) between them in the direction of the edge of the waterborne sound transducer (20) than in the center of the waterborne sound transducer.

4. The waterborne sound transducer (20) as claimed in one of the preceding claims,
wherein the transducer elements (26) have a smaller thickness (28) in the direction of the edge of the waterborne sound transducer (28) than in the center of the waterborne sound transducer.

5. The waterborne sound transducer (20) as claimed in one of the preceding claims,
wherein the waterborne sound transducer has a composite piezoceramic.

6. The waterborne sound transducer (20) as claimed in one of the preceding claims,
wherein a selection of the transducer elements (22) has the same spacing between them, wherein the selection comprises at least half, in particular two thirds or three quarters, of the transducer elements (22) of the multiplicity of transducer elements (22).

7. The waterborne sound transducer (20) as claimed in claim 6,
wherein the selection of the transducer elements (22) is arranged in the center of the waterborne sound transducer.

8. The waterborne sound transducer (20) as claimed in one of the preceding claims,
wherein a first subset of the transducer elements (22), starting from the center of the waterborne sound transducer, is arranged equidistantly, wherein a second subset of the transducer elements (22) has a greater spacing between them as the distance from the center of the waterborne sound transducer increases.

9. The waterborne sound transducer (20) as claimed in one of the preceding claims,
wherein a first subset of the transducer elements (22), starting from the center of the waterborne sound transducer, has the same thickness, wherein a second subset of the transducer elements (22) has a decreasing thickness (28) as the distance from the center of the waterborne sound transducer increases.

10. The waterborne sound transducer (20) as claimed in one of claims 8 or 9,
wherein the first subset of the transducer elements (22) comprises at least half of the transducer elements of the multiplicity of transducer elements.

11. The waterborne sound transducer (20) as claimed in one of the preceding claims,
wherein the thickness of the outermost transducer element is chosen such that a first transducer element is at least twice as wide as an outermost transducer element.

12. A method for manufacturing a waterborne sound transducer having a directed radiation characteristic for a sonar with the following steps:
- arranging a multiplicity of transducer elements such that the transducer elements have different spacings between them and/or the transducer elements have different thicknesses in order to smooth the radiation characteristic of the waterborne sound transducer, wherein the transducer elements are designed to convert waterborne sound into an electrical signal corresponding to the sound pressure and/or to convert an applied electrical voltage into waterborne sound, wherein the thickness of a transducer element of the multiplicity of transducer elements is the, in particular mean, lateral extension of the transducer element.

## Revendications

1. Transducteur (20) de sons véhiculés par l'eau ayant une caractéristique de direction pour un sonar avec les caractéristiques suivantes :
une multiplicité d'éléments transducteurs (22) conçus pour convertir les bruits de l'eau en un signal électrique correspondant à la pression sonore et/ou pour convertir une tension électrique appliquée en bruits de l'eau ;
dans lequel les éléments transducteurs (22) ont des épaisseurs différentes (28) et/ou les éléments transducteurs (22) sont disposés de telle sorte qu'au moins certains des éléments transducteurs (22) ont des espacements différents (26) par rapport aux éléments transducteurs adjacents afin de lisser la caractéristique de rayonnement (30) du transducteur de sons véhiculés par l'eau (20) ;
dans lequel l'épaisseur d'un élément transducteur de la multiplicité d'éléments transducteurs est l'extension latérale moyenne de l'élément transducteur.

2. Le transducteur de sons véhiculés par l'eau (20) selon la revendication 1,
dans lequel les éléments transducteurs (22) sont disposés sur une trajectoire courbe.

3. Le transducteur de sons véhiculés par l'eau (20) selon l'une des revendications précédentes, dans lequel les éléments transducteurs (22) sont disposés sur une trajectoire courbe,
dans lequel les éléments transducteurs (22) sont plus espacés (26) dans la direction du bord du transducteur de bruit de mer (20) qu'au centre du transducteur de bruit de mer.

4. Le transducteur de sons véhiculés par l'eau (20) selon l'une des revendications précédentes,
dans lequel les éléments du transducteur (26) ont une épaisseur (28) plus faible dans la direction du bord du transducteur de son de bord (28) qu'au centre du transducteur de son de bord.

5. Le transducteur de sons véhiculés par l'eau (20) selon l'une des revendications précédentes, dans lequel le transducteur de son de bord (28) a une épaisseur plus petite dans la direction du bord que dans la direction du centre du transducteur,
dans lequel le transducteur de son embarqué est constitué d'une piézocéramique composite.

6. Le transducteur de sons véhiculés par l'eau (20) selon l'une des revendications précédentes, dans lequel le transducteur de sons véhiculés par l'eau a une piézocéramique composite,
dans lequel une sélection d'éléments transducteurs (22) a le même espacement entre eux, dans lequel la sélection comprend au moins la moitié, en particulier les deux tiers ou les trois quarts, des éléments transducteurs (22) de la multiplicité d'éléments transducteurs (22).

7. Le transducteur de sons véhiculés par l'eau (20) selon la revendication 6,
dans lequel la sélection des éléments transducteurs (22) est disposée au centre du transducteur sonore aquatique.

8. Le transducteur de sons véhiculés par l'eau (20) selon l'une des revendications précédentes, dans lequel un premier sous-ensemble des éléments transducteurs (22) est disposé au centre du transducteur acoustique aquatique,
dans lequel un premier sous-ensemble d'éléments de transducteur (22), partant du centre du transducteur de son de bord, est disposé de manière équidistante, dans lequel un deuxième sous-ensemble d'éléments de transducteur (22) est plus espacé à mesure que la distance par rapport au centre du transducteur de son de bord augmente.

9. Le transducteur de sons véhiculés par l'eau (20) selon l'une des revendications précédentes,
dans lequel un premier sous-ensemble d'éléments de transducteur (22), à partir du centre du transducteur de son de bord, a la même épaisseur, dans lequel un deuxième sous-ensemble d'éléments de transducteur (22) a une épaisseur décroissante (28) à mesure que la distance du centre du transducteur de son de bord augmente.

10. Le transducteur de sons véhiculés par l'eau (20) selon l'une des revendications 8 ou 9,
dans lequel le premier sous-ensemble d'éléments transducteurs (22) comprend au moins la moitié des éléments transducteurs de la multiplicité d'éléments transducteurs.

11. Le transducteur de sons véhiculés par l'eau (20) selon l'une des revendications précédentes, dans lequel l'épaisseur de l'élément transducteur le plus extérieur (22) comprend au moins la moitié de la multiplicité des éléments transducteurs,
dans lequel l'épaisseur de l'élément transducteur le plus extérieur est choisie de manière à ce qu'un premier élément transducteur soit au moins deux fois plus large qu'un élément transducteur le plus extérieur.

12. Méthode de fabrication d'un transducteur de sons véhiculés par l'eau ayant une caractéristique de rayonnement dirigé pour un sonar, comprenant les étapes suivantes :
- disposer une multiplicité d'éléments de transducteur de telle sorte que les éléments de transducteur aient différents espacements entre eux et/ou que les éléments de transducteur aient différentes épaisseurs afin d'adoucir la caractéristique de rayonnement du transducteur sonore aquatique, les éléments de transducteur étant conçus pour convertir le son aquatique en un signal électrique correspondant à la pression acoustique et/ou pour convertir une tension électrique appliquée en son aquatique, l'épaisseur d'un élément de transducteur de la multiplicité d'éléments de transducteur étant l'extension latérale moyenne, en particulier, de l'élément de transducteur.
